(19) Europäisches Patentamt
European Patent Office
Office européen des brevets

(11) Veröffentlichungsnummer : **0 065 236**
**B1**

(12) **EUROPÄISCHE PATENTSCHRIFT**

(45) Veröffentlichungstag der Patentschrift : **24.04.85**

(51) Int. Cl.$^4$ : **C 07 F 9/24**

(21) Anmeldenummer : **82103963.3**

(22) Anmeldetag : **07.05.82**

(54) **Verfahren zur Herstellung von O,S-Dialkylphosphoroamidothioaten.**

(30) Priorität : **19.05.81 US 265046**

(43) Veröffentlichungstag der Anmeldung : **24.11.82 Patentblatt 82/47**

(45) Bekanntmachung des Hinweises auf die Patenterteilung : **24.04.85 Patentblatt 85/17**

(84) Benannte Vertragsstaaten : **BE CH DE FR GB IT LI NL**

(56) Entgegenhaltungen : **US-A- 3 639 547**
**Die Akte enthält technische Angaben, die nach dem Eingang der Anmeldung eingereicht wurden und die nicht in dieser Patentschrift enthalten sind.**

(73) Patentinhaber : **Mobay Chemical Corporation**
**Penn Lincoln Parkway West**
**Pittsburgh, Pennsylvania 15205 (US)**

(72) Erfinder : **Lonsinger, Jack J.**
**508 Clayview Drive**
**Liberty Missouri 64068 (US)**
Erfinder : **Halbleib, Chester W.**
**Rural Route 1 Box 483**
**Holt Missouri 64048 (US)**

(74) Vertreter : **Gremm, Joachim, Dr. et al**
**Bayer AG c/o Zentralbereich Patente, Marken und Lizenzen**
**D-5090 Leverkusen 1, Bayerwerk (DE)**

**EP 0 065 236 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft eine Verbesserung des bekannten Verfahrens zur Isomerisierung von O,O-Dimethylphosphoroamidothioat zu O,S-Dimethylphosphoroamidothioat.

Die US-PS 3 639 547 beschreibt die katalytische Isomerisierung von O,O-Dimethylphosphoroamidothioat zu O,S-Dimethylphosphoroamidothioat nach der folgenden Gleichung

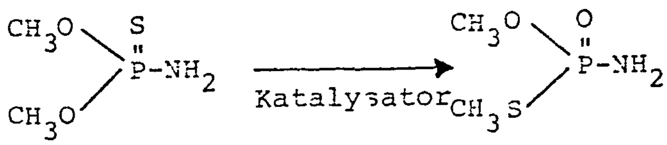


Zu geeigneten Katalysatoren zählen ein Methylester einer organischen Alkyl- oder carbocyclischen Aryl-sulfonsäure, worin die Alkyl-Gruppe 1 bis 6 Kohlenstoff-Atome und die carbocyclische Aryl-Gruppe 6 bis 10 Kohlenstoff-Atome besitzen, und insbesondere Dimethylsulfat. Wiewohl der Katalysator in einer Menge von etwa 1 bis 10 Molprozent, insbesondere von 3 bis 5 Molprozent eingesetzt werden kann, beträgt die bevorzugte Menge bei Dimethylsulfat 4 Molprozent und bei Methyltosylat 3 bis 8 Molprozent (vgl. US-PS 3 639 547, Spalte 2, Zeilen 43 bis 62). Die Reaktion verläuft exotherm, und die Temperatur kann durch Kühlen oder Erhitzen bei etwa 20 °C bis 80 °C gehalten werden, obwohl sie vorzugsweise etwa 40 °C bis 80 °C beträgt (vgl. US-PS 3 639 547, Spalte 2, Zeilen 63 bis 72 und Spalte 3, Zeilen 1 bis 8).

Obwohl das Verfahren im allgemeinen zufriedenstellend ist, liegen die Ausbeuten im besten Falle bei 78,5 %, wobei der Rest zum Teil aus nicht isomerisiertem Ausgangsmaterial sowie aus verschiedenen Nebenprodukten besteht.

Die vorliegende Erfindung betrifft dementsprechend die Verbesserung eines solchen Verfahrens dahingehend, daß die Ausbeute erhöht und/oder die erforderliche Menge des Katalysators verringert wird.

Das erfindungsgemäße Verfahren zur Isomerisierung des O,O-Dimethylphosphoroamidothioats der Formel I

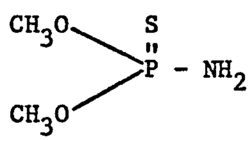

(I)

zum O,S-Dimethylphosphoroamidothioat der Formel II

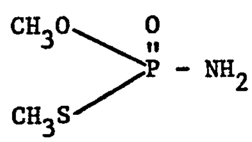

(II)

durch Erhitzen des O,O-Dimethyl-Ausgangsmaterials in Gegenwart eines Katalysators, wobei Isomerisierung erfolgt, und nachfolgende Gewinnung des gewünschten O,S-Dimethyl-Endproduktes ist dadurch gekennzeichnet, daß das Erhitzen unterbrochen wird, sobald 40 bis 70 % des O,O-Dimethyl-Ausgangsmaterials zu dem O,S-Dimethyl-Produkt isomerisiert worden sind, daß das unumgesetzte O,O-Dimethyl-Ausgangsmaterial von dem O,S-Dimethyl-Isomerisierungsprodukt durch Destillation und/oder durch Abtrennung des beim Abkühlen des Reaktionsgemisches auf Temperaturen unterhalb Raumtemperatur kristallin anfallenden O,S-Dimethylphosphoroamidothioates abgetrennt wird und daß das O,O-Dimethyl-Ausgangsmaterial weiter behandelt wird, um eine weitere Isomerisierung herbeizuführen.

Gemäß der vorliegenden Erfindung wird also die katalytische Isomerisierung zum Stehen gebracht, wenn 40 bis 70 % des O,O-Dimethyl-Ausgangsmaterials zu dem O,S-Dimethyl-Produkt isomerisiert worden sind. Danach umfaßt das Verfahren die Trennung der Isomerisationsmischung in Katalysator und/oder unumgesetztes O,O-Dimethyl-Ausgangsmaterial einerseits und O,S-Dimethyl-Isomerisierungsprodukt andererseits sowie eine weitere Behandlung der Mischung aus Katalysator und O,O-Dimethyl-Ausgangsmaterial, um eine weitere Isomerisierung herbeizuführen.

Infolge der Unterbrechung und Abtrennung wird die Gesamtausbeute an Isomerisierungsprodukt auf 85 % und mehr gesteigert, und das Produkt weist hohe Reinheit auf. Darüber hinaus ist es möglich, diese Ergebnisse sogar unter Verringerung der erforderlichen Menge des Katalysators zu erzielen.

Das Erhitzen erfolgt allgemein auf etwa 40 °C bis 70 °C und vorzugsweise auf etwa 55 °C bis 60 °C. Die Dauer der einleitenden Beheizung beträgt im allgemeinen 0,5 bis 1 h, je nach der zu erreichenden Temperatur; sie werden so zueinander in Beziehung gesetzt, daß eine Isomerisierung von 40 bis 70 %, vorzugsweise von 55 bis 60 %, herbeigeführt wird.

Der Katalysator kann einer von denjenigen sein, die üblicherweise (vgl. US-PS Nr. 3.639.547) verwendet werden, und er kann auch in der üblichen Menge (vgl. US-PS Nr. 3.639.547) eingesetzt werden, obwohl es möglich ist, die Vorteile der vorliegenden Erfindung sogar mit so geringen Mengen wie 4 bis 1 %, z. B. 2,5 % oder sogar nur 1 %, bezogen auf das Gewicht des O,O-Dimethylesters, zu erzielen.

Geeignete Katalysatoren sind z. B. Methylester von $C_{1-6}$-Alkylsulfonsäuren oder von $C_{6-10}$-Arylsulfonsäuren. Bei den Estern der Alkylsulfonsäuren sind die $C_{1-4}$-Alkyl methylsulfonsäuren bevorzugt. Bei den Estern der Arylsulfonsäuren sind die Methylester der gegebenenfalls im Arylrest substituierten Phenyl- und Naphthyl- (insbesondere Phenyl) sulfonsäuren bevorzugt. Die Arylteile (vorzugsweise der Phenylteil) können einen oder mehrere (vorzugsweise einen), gleiche oder verschiedene Substituenten enthalten, wobei beispielhaft Halogen, insbesondere Chlor und Brom und $C_{1-4}$-Alkyl, insbesondere Methyl genannt seien. Als geeignete Katalysatoren seien beispielhaft aufgeführt die Methylester der Methylsulfonsäure, Ethylsulfonsäure und Propylsulfonsäure, der Naphthylsulfonsäure, der Phenylsulfonsäure, der 4-Chlorphenylsulfonsäure, der 4-Bromphenylsulfonsäure oder der 4-Methylphenylsulfonsäure (p-Toluolsulfonsäure). Als besonders wichtiger Katalysator sei Dimethylsulfat hervorgehoben.

Nach Beendigung der Beheizung kann das Isomerisations-Gemisch zwei verschiedenen Behandlungen unterworfen werden. Bei der einen wird die Masse auf eine Temperatur etwa unterhalb der Raumtemperatur, vorzugsweise auf etwa 0 °C oder noch niedriger, abgekühlt, worauf das O,S-Dimethyl-Isomere selektiv auskristallisiert. Die Kristallisations-Zeit kann so kurz sein, daß sie nur 30 min beträgt, obwohl sich für eine im wesentlichen vollständige Gewinnung des O,S-Dimethyl-Isomeren eine Dauer von 6 h als wünschenswert erwiesen hat. Die Kristalle, die danach von der Mutterlauge abgetrennt werden, etwa durch Filtration oder Zentrifugieren, besitzen eine Reinheit, die oberhalb von 95 % liegt und sogar 98 % erreicht.

Beim Wiedererhitzen der aus Ausgangsmaterial, Katalysator und einer gewissen Menge Nebenprodukten bestehenden Mutterlauge findet Isomerisierung statt. In dieser Stufe wird die Masse, vorzugsweise mindestens 30 min, auf die gleiche Temperatur wie vorher erhitzt, bis weniger als etwa 10 % des ursprünglich eingesetzten O,O-Dimethylesters: unisomerisiert verblieben sind. Es wird eine weitere Charge des O,S-Dimethyl-Isomeren erhalten, die im wesentlichen die gleiche Zusammensetzung wie das bei dem üblichen Verfahren anfallende Produkt besitzt und gegebenenfalls gereinigt werden kann. Die Gesamt-Ausbeute an dem O,S-Dimethyl-Isomeren beträgt etwa 85 % oder mehr. Es ist sogar möglich, die Unterbrechung der Isomerisierung und die Entfernung der Kristalle noch ein zweites Mal vorzunehmen, bevor der abschließende Isomerisierungsschritt durchgeführt wird.

Bei dem alternativen Weg der Weiterverarbeitung der Masse nach dem Unterbrechen der Beheizung wird die Mischung der Destillation unterworfen, z. B. einer Dünnschicht-Verdampfung bei etwa 150 °C und 1,33-2,67 mbar (1-2 mm Hg), wobei das unumgesetzte O,O-Dimethyl-Ausgangsmaterial abdestilliert wird und danach anteilig erneut in den Kreislauf eingespeist wird. Der Destillationsrückstand besteht aus O,S-Dimethyl phosphoroamidothioat mit einer Reinheit von etwa 85 bis 90 %. Insgesamt liegt die Netto-Ausbeute bei 90 % oder noch mehr.

Das Verfahren kann chargenweise oder kontinuierlich durchgeführt werden.

**Patentansprüche**

1. Verfahren zur Herstellung von O,S-Dimethylphosphoroamidothioat der Formel II

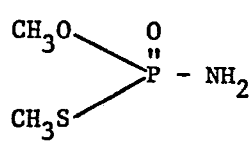

(II)

durch Erhitzen von O,O-Dimethylphosphoroamidothioat der Formel I

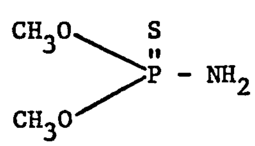

(I)

in Gegenwart eines Katalysators, wobei Isomerisierung erfolgt, und nachfolgende Gewinnung des gewünschten O,S-Dimethyl-Endproduktes, dadurch gekennzeichnet, daß das Erhitzen unterbrochen wird, sobald 40 bis 70 % des O,O-Dimethyl-Ausgangsmaterials zu dem O,S-Dimethyl-Produkt isomerisiert worden sind, daß das unumgesetzte O,O-Dimethyl-Ausgangsmaterial von dem O,S-Dimethyl-Isomerisierungsprodukt durch Destillation und/oder durch Abtrennung des beim Abkühlen des Reaktionsgemisches auf Temperaturen unterhalb Raumtemperatur kristallin anfallenden O,S-Dimethylphosphoroami-

dothioates abgetrennt wird und daß das O,O-Dialkyl-Ausgangsmaterial weiter behandelt wird, um eine weitere Isomerisierung herbeizuführen.

2. Verfahren nach Anspruch 1, dadurch gekennzeichnet, daß das Erhitzen unterbrochen wird, nachdem 55 bis 60 % des O,O-Dialkyl-Ausgangsmaterials isomerisiert worden sind.

3. Verfahren nach den Ansprüchen 1 und 2, dadurch gekennzeichnet, daß das Aufheizen auf eine Temperatur von etwa 40 °C bis 70 °C erfolgt, daß die weitere Behandlung bei dieser Temperatur durchgeführt wird und daß das Abkühlen auf eine Temperatur unterhalb von 0 °C erfolgt.

4. Verfahren nach den Ansprüchen 1 und 2, dadurch gekennzeichnet, daß die Trennung in der Weise durchgeführt wird, daß 40 bis 60 % der Masse abdestilliert werden.

5. Verfahren nach Anspruch 4, dadurch gekennzeichnet, daß das Destillat im Kreislauf zurückgeführt und als Teil des in einen anderen Isomerisations-Cyclus eingespeisten Ausgangsmaterials verwendet wird.

6. Verfahren nach Anspruch 5, dadurch gekennzeichnet, daß das Aufheizen auf eine Temperatur von etwa 40 °C bis 70 °C erfolgt, daß der nachfolgende Cyclus zur Herbeiführung der Isomerisierung bei dieser Temperatur durchgeführt wird und daß die Destillation bei einer höheren Temperatur durchgeführt wird.

7. Verfahren nach Anspruch 5, dadurch gekennzeichnet, daß der Katalysator in einer Menge von 1 bis 2,5 Gewichts-% des eingespeisten Ausgangsmaterials eingesetzt wird.

**Claims**

1. Process for the preparation of O,S-dimethylphosphoroamidothioate of the formula II

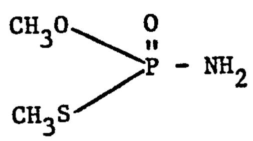

(II)

by heating O,O-dimethylphosphoroamidothioate of the formula I

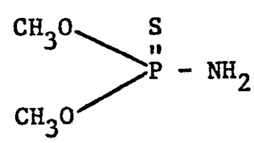

(I)

in the presence of a catalyst, during which isomerisation takes place, and subsequently recovering the required O,S-dimethyl end product, characterised in that the heating is arrested as soon as 40 to 70 % of the O,O-dimethyl starting material have been isomerised to form the O,S-dimethyl product, in that the unreacted O,O-dimethyl starting material is separated from the O,S-dimethyl isomerisation product by distillation and/or by separating off the O,S-dimethylphosphoroamidothioate which is obtained in a crystalline form on cooling the reaction mixture to temperatures below room temperature and in that the O,O-dialkyl starting material is treated further to effect further isomerisation.

2. Process according to Claim 1, characterised in that heating is arrested when 55 to 60 % of the O,O-dialkyl starting material have been isomerised.

3. Process according to Claims 1 and 2, characterised in that heating is carried out to a temperature of about 40 °C to 70 °C, in that the further treatment is effected at this temperature and in that cooling is carried out to a temperature of below 0 °C.

4. Process according to Claims 1 and 2, characterised in that the separation is carried out in such a way that 40 to 60 % of the mass are distilled off.

5. Process according to Claim 4, characterised in that the distillate is recycled and used as part of the starting material fed into another isomerisation cycle.

6. Process according to Claim 5, characterised in that heating is carried out to a temperature of about 40 °C to 70 °C, in that the subsequent cycle to effect isomerisation is carried out at this temperature and in that the distillation is carried out at a higher temperature.

7. Process according to Claim 5, characterised in that the catalyst is used in an amount of 1 to 2.5 % by weight of the starting material introduced.

**Revendications**

1. Procédé pour la fabrication de phosphoramidothioate de O,S-diméthyle de formule II

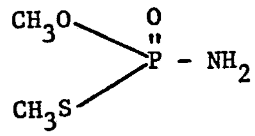

(II)

par chauffage de phosphoramidothioate de O,O-diméthyle de formule I

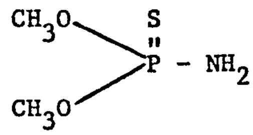

(I)

en présence d'un catalyseur, ce qui produit l'isomérisation, suivi de récupération du produit final O,S-diméthylé souhaité, caractérisé en ce que le chauffage est interrompu dès que 40 à 70 % du produit de départ O,O-diméthylé ont été isomérisés en le produit O,S-diméthylé, en ce que le produit de départ O,O-diméthylé non transformé est séparé du produit d'isomérisation O,S-diméthylé par distillation et/ou par séparation du phosphoramidothioate de O,S-diméthyle se formant à l'état cristallin par refroidissement du mélange de réaction à des températures inférieures à la température ambiante et en ce que le produit de départ O,O-dialkylé est encore traité pour provoquer une nouvelle isomérisation.

2. Procédé selon la revendication 1, caractérisé en ce que le chauffage est interrompu après que 55 à 60 % du produit de départ O,O-dialkylé ont été isomérisés.

3. Procédé selon les revendications 1 et 2, caractérisé en ce que le chauffage s'effectue à une température d'environ 40 à 70 °C, en ce que le traitement ultérieur est mis en œuvre à cette température et en ce que le refroidissement s'effectue jusqu'à une température inférieure à 0 °C.

4. Procédé selon les revendications 1 et 2, caractérisé en ce que la séparation est mise en œuvre de telle manière que 40 à 60 % de la masse soient distillés.

5. Procédé selon la revendication 4, caractérisé en ce que le distillat est renvoyé dans le circuit et utilisé comme partie du produit de départ introduit dans un autre cycle d'isomérisation.

6. Procédé selon la revendication 5, caractérisé en ce que le chauffage s'effectue jusqu'à une température d'environ 40 à 70 °C, en ce que le cycle suivant est mis en œuvre à cette température pour provoquer l'isomérisation et en ce que la distillation est mise en œuvre à une température supérieure.

7. Procédé selon la revendication 5, caractérisé en ce que le catalyseur est utilisé en quantité de 1 à 2,5 % en poids du produit de départ introduit.